**Europäisches Patentamt**

**European Patent Office**

**Office européen des brevets**

(19)

(11) Publication number : **0 109 532 B2**

# (12) NEW EUROPEAN PATENT SPECIFICATION

(45) Date of publication of the new patent specification : **29.01.92 Bulletin 92/05**

(51) Int. Cl.[5] : **C08F 255/02,** C08F 4/38, // (C08F255/02, 220:06)

(21) Application number : **83110192.8**

(22) Date of filing : **12.10.83**

(54) **Process for manufacturing mofified olefinic polymers.**

(30) Priority : **14.10.82 IT 2374782**

(43) Date of publication of application :
**30.05.84 Bulletin 84/22**

(45) Publication of the grant of the patent :
**04.01.89 Bulletin 89/01**

(45) Mention of the opposition decision :
**29.01.92 Bulletin 92/05**

(84) Designated Contracting States :
**BE DE FR GB NL**

(56) References cited :
**DE-B- 1 495 275**
**FR-A- 1 261 116**
**GB-A- 604 544**
**GB-A- 1 086 839**
**US-A- 3 177 269**
**US-A- 3 862 265**
**US-A- 3 987 122**

(73) Proprietor : **Montedison S.p.A.**
**31, Foro Buonaparte**
**I-20121 Milan (IT)**

(72) Inventor : **Clementini, Luciano**
**4, via A. Pompeo**
**Terni (IT)**
Inventor : **Spagnoli, Leonardo**
**12, Via del Lanificio**
**Terni (IT)**

(74) Representative : **Weinhold, Peter, Dr. et al**
**Patentanwälte Dr. V. Schmied-Kowarzik**
**Dipl.-Ing. G. Dannenberg Dr. P. Weinhold Dr. D.**
**Gudel Dipl.-Ing. S. Schubert Dr. P. Barz**
**Siegfriedstrasse 8**
**W-8000 München 40 (DE)**

EP 0 109 532 B2

## Description

The present invention relates to a process for manufacturing modified olefinic polymers. "Modified olefinic polymers" means olefinic polymers containing along the chain a few free carboxylic groups which impart typical properties to the olefinic polymer, in particular a strong adhesion to metals.

Polypropylene in the form of prevailingly isotactic macromolecules, crystalline ethylene/propylene copolymers predominantly consisting of propylene units, both of the random type and of the block type, prepared by means of stereospecific catalysts have proved as suitable polyolefins to be modified according to the process of this invention.

In the technical and patent literature there is described the grafting of unsaturated acids on polypropylene, through the formation of radicals formed by the action of radiation (beta rays, gamma rays, electric discharges, electron beams) or by radical initiators, such as oxygen, ozone, peroxides, azocompounds, or by heating to high temperatures, in a vapour phase. US-A-3,987,122 describes the grafting of unsaturated acids onto olefinic polymers through the action of organic peroxides at high temperature in a mixture of olefinic polymer and unsaturated acid. The resulting products are suitable as hot melts because of their ability to adhere to metals. According to this method, the grafting is accomplished directly during the extrusion of the mixture of olefinic polymer and unsaturated acid, employing as initiators organic peroxides having a 10 hour half-life temperature higher than 80°C, such as dicumyl peroxide, tert. -butyl - perbenzoate, 2,5 -dimethyl - 2,5 - di - tert. - butyl - peroxy - 3 - hexyne and $\alpha,\alpha'$ - bis(tert. - butyl - peroxy) - diisopropyl - benzene.

A new process has now been found, which is the object of the invention, for grafting unsaturated carboxylic acids onto olefinic polymers and copolymers, in the absence of solvents, comprising a preliminary peroxidation of the olefinic polymer, such peroxidation being achieved by treating the polymer in the form of granules in a mixer for powders, of the rapid type, at temperatures of 70°C-120°C for times ranging from 10 to 100 minutes, such limits of time being respectively referred to the maximum temperature and to the minimum temperature, with a first organic peroxide having a half-life of less than 30 minutes at 100°C.

Subsequently, the thus peroxidized olefinic polymer is mixed, at a temperature not exceeding 220°C, with the unsaturated carboxylic acid and with a second organic peroxide having a half-life of $\leq 30$ seconds at 200°C.

Grafting of the unsaturated acid onto the previously peroxidized polyolefinic chain is accomplished by bringing the above obtained mixture to a temperature of 180°C-220°C for a few seconds.

According to a preferred embodiment of the present process the actual grafting reaction is accomplished by passing the mixture of olefinic polymer, carboxylic acid and organic peroxide through a mixer operating at 180°C-220°, the residence time of the mixture being from 20 to 30 seconds.

The peroxide of the second type, utilized in the grafting step, may also be added to the starting polymer, along with the first type peroxide. This modification proves advantageous in practice because a more homogeneous and complete incorporation of the second type peroxide into the peroxide into the polymeric material is obtained.

The peroxides to be used in the first step are lauroyl peroxide, benzoylperoxides, p-chlorobenzoyl peroxide and decanoyl peroxide.

The peroxide amount employed is of the order of 0.1 to 0.5 g/100 g of polymer.

The peroxides to be introduced into the 2nd step and being utilized in the successive grafting of the unsaturated acid are, 2,5 - dimethyl - 2,5 - bis(tert. - butyl - peroxy) - hexane, tert. - butylperoxide, dicumylperoxide and di - tert. - butyl - benzoate peroxide.

The amount of peroxide employed is of the order of 0.01-0.1 g/100 g of olefinic polymer.

Examples of unsaturated acids to be grafted onto the polyolefinic chain are acrylic acid, maleic acid, fumaric acid, itaconic acid, methacrylic acid and derivatives thereof. Acrylic acid and methacrylic acid are particularly suited. The amount of unsaturated acid to be used is the one generally employed in the production of olefinic polymers modified by grafting of the above acids and is of the order of 0.1-10 g/100 g of olefinic polymer.

Particularly, the grafting step can be carried out by placing the resulting mixture of preliminarily peroxidized olefinic polymer, unsaturated acid and organic peroxide in an extruder-granulator, operating at a temperature and using a residence time of the polymer as indicated above.

Unlike the processes of the prior art in which the olefinic polymer and the unsaturated acid are reacted in the presence of a peroxide in one step only, the process according to the presente invention is characterized by the preliminary peroxidation of the olefinic polymer with organic peroxides of the type selected for this step, and by the successive grafting of the acid in the presence of peroxides of the type selected for this step.

The operative features of the process according to the invention allow to obtain grafted olefinic polymers having improved properties, in parricular a high adhesion to metals, with high peeling test values, measured according to standart A.S.T.M. D-903/65. On samples consisting of metal plates and modified polyolefins, peel strength measurements were effected after immersion in water of 25°C for 30 days: the modified polyolefins according to the present invention retained the peeling test values unchanged.

The improved characteristics of the obtained products are to be considered the consequence of the specific conditions under which the unsaturated acid grafting has been accomplished.

These conditions allow to reduce the degree of homopolymerization of the unsaturated acid to a minimum and to accomplish the grafting thereof onto many sites of the polyolefinic chain, thus achieving a structure in which there are several and very short acid side chains.

When practicing the process of the present invention its features can be modified and varied within a wide range without departing from the spirit and the scope of the invention.

The following examples are given to illustrate the invention.

Example 1

Into a 10 l stainless steel-type mixer of the rapid type there were introduced:

| —polypropylene in flakes | 2 kg |
| —lauroyl peroxide | 6 g |
| —2,5-dimethyl-2,5-bis(tert.-butylperoxy)-hexane | 1 g |

The polypropylene exhibited:
– an inherent viscosity of 2.28 dl/g
– a residue of the extraction with heptane of 97.9%.

After mixing at 110°C for 1 hour the polymer exhibited -OOH=0.07%±0.01% by weight and an inherent viscosity of 1.5 dl/g. The temperature was lowered down to 30°C, and 40 g of acrylic acid were then introduced.

After mixing at 30°C for 20 minutes the polymer was discharged and granulated at 200°C in 45 mm single-screw extruder. The residence time of the material in the extruder was 30 seconds.

The resulting granulated product exhibited -COOH=1.2% by weight, equal to 1.92% of acrylic acid.

Plates prepared in a press at 200°C for 5 minutes starting from two aluminium plates (100 μm thick), with interposition of grafted polymer, exhibited a peel strength (peeling test) of 20 N/cm±2(2 kg/cm±0.2).

After a 30-day immersion in water, at 25°C, the peeling test value remained unchanged.

Example 2

Into a 10 l stainless steel mixer of the rapid type there were introduced:

| —propylene/ethylene copolymer | 2 kg |
| —lauroyl peroxide | 6 g |
| —2,5-dimethyl-2,5-bis(tert.-butylperoxy)-hexane | 1 g |

The propylene/ethylene random copolymer exhibited:
– an inherent viscosity of 3.6 dl/g
– an ethylene content of 5.0% by weight.

After mixing at 90°C for 1 hour the polymer exhibited -OOH=0.04% by weight.

The temperature was decreased to 30°C, and 40 g of acrylic acid were introduced.

After mixing at 30°C for 20 minutes, the polymer was discharged and granulated at 200°C in a single-screw extruder of 45 mm.

The obtained granulated product exhibited -COOH=1.0% by weight, corresponding to 1.6% of acrylic acid.

Plates prepared in a press at 200°C for 5 minutes starting from two aluminium plates (100 μm thick), with interposition of grafted polymer, exhibited a peel strength (peeling test) of 20 N/cm±2(2 kg/cm±0.2).

After a 30-day immersion in water of 25°C the peeling test value remained unchanged.

Example 3

Into a 10 l stainless steel mixer of the rapid type there were introduced:

| —polypropylene in flakes | 2 kg |
| —lauroyl peroxide | 6 g |
| —2,5-dimethyl-2,5-bis(tert.-butylperoxy)-hexane | 1 g |

The polypropylene exhibited:
– an inherent viscosity of 2.28 dl/g
– a residue of the extraction with heptane of 97.9%.

After mixing for 1 hour at 110°C the polymer exhibited -OOH=0.07%±0.01% and [η]=1.5. The temperature was lowered to 30°C, and 80 g of acrylic acid were introduced.

After mixing at 30°C for 20 minutes, the polymer was discharged and was granulated at 200°C in a single-screw 45-mm extruder.

The obtained granulated product exhibited -COOH=2.2% by weight, corresponding to 3.5% of acrylic acid.

Plates prepared in a press at 200°C for 5 minutes starting from two aluminium plates (100 μm thick), with interposition of grafted polymer, exhibited a peel strength (peeling test)=20 N/cm±2(2 kg/cm±0.2).

After a 30-day immersion in water of 25°C the peeling test value remained unchanged.


Example 4

Into a 10 l stainless steel mixer of the rapid type there were introduced:

| —polypropylene in flakes | 2 kg |
| —lauroyl peroxide | 6 g |
| —2,5-dimethyl-2,5-bis(tert.-butylperoxy)-hexane | 1 g |

The polypropylene exhibited:
– an inherent viscosity of 2.28 dl/g
– a residue of the extraction with heptane of 97.9%.

After mixing at 110°C for 1 hour the polymer exhibited -OOH=0.07%±0.01 and [η]=1.5.

The temperature was decreased to 30°C, and 10 g of acrylic acid were introduced.

After mixing at 30°C for 20 minutes the polymer was discharged and granulated at 200°C in a 45 mm single-screw extruder.

The granulated product obtained exhibited -COOH=0.3% by weight, corresponding to 0.48% of acrylic acid.

Plates prepared in a press at 200°C for 5 minutes starting from two aluminium plates (thickness: 100 μm), with interposition of grafted polymer, exhibited a peel strength (peeling test) of 16 N/cm±2(1.6 kg/cm±0.2).

After a 30-day immersion in water of 25°C the peeling test value remained unchanged.


Example 5

Into a 10 l stainless steel mixer of the rapid type there were introduced:

| —polypropylene in flakes | 2 kg |
| —benzoyl peroxide | 6 g |
| —2,5-dimethyl-2,5-bis(tert.-butylperoxy)-hexane | 1 g |

The polypropylene exhibited:
– an inherent viscosity of 2.28 dl/g
– a residue of the extraction with heptane of 97.9%.

After mixing for 1 hour at 110°C the polymer exhibited -OOH=0.072 and an inherent viscosity of 1.6 dl/g.

The temperature was decreased to 30°C, and 40 g of acrylic acid were introduced.

After mixing at 30°C for 20 minutes the polymer was discharged and granulated at 200°C in a 45-mm single-screw extruder.

The granulated product obtained exhibited -COOH=1.25% by weight, corresponding to 2% of acrylic acid.

Plates prepared in a press at 200°C for 5 minutes starting from two aluminium plates (thickness: 100 μm), with interposition of grafted polymer, exhibited a peel strength (peeling test) of 22 N/cm (2.2 kg/cm).

After a 30-day immersion in water of 25°C the peeling test value remained unchanged.


Example 6

Into a 10 l stainless steel mixer of the rapid type there were introduced:

4

| —polypropylene in flakes | 2 kg |
| —lauroyl peroxide | 6 g |
| —2,5-dimethyl-2,5-bis(tert.-butylperoxy)-hexane | 0.6 g |

The polypropylene exhibited:
– an inherent viscosity of 2.28 dl/g
– a residue of the extraction with heptane of 97.9%.
After mixing for 1 hour at 110°C the polymer exhibited -OOH=0.07%±0.01 and [η]=1.5.
The temperature was decreased to 30°C, and 40 g of acrylic acid was introduced.

After mixing at 30°C for 20 minutes the polymer was discharged and granulated at 200°C in a 45 mm single-screw extruder.

The obtained granulated product exhibited -COOH= 1.0% by weight, corresponding to 1.6% of acrylic acid.

Plates prepared in a press at 200°C for 5 minutes starting from two aluminium plates (thickness: 100 μm), with interposition of grafted polymer, exhibited a peel strength (peeling test) of 14 N/cm±2(1.4 kg/cm±0.2).

After a 30 day immersion in water of 25°C the peeling test value remained unchanged.

Example 7

Into a 10 1 stainless steel mixer of the rapid type there were introduced:

| —polypropylene in flakes | 2 kg |
| —lauroyl peroxide | 6 g |
| —2,5-dimethyl-2,5-bis(tert.-butylperoxy)-hexane | 1 g |

The polypropylene exhibited:
– an inherent viscosity of 2.28 dl/g
– a residue of the extraction with heptane of 97.9%.
After mixing for 1 hour at 110°C the polymer exhibited -OOH=0.07%±0.01 and [η]=1.5.
The temperature was lowered to 30°C, and 10 g of acrylic acid were introduced.

After mixing at 30°C for 20 minutes the polymer was discharged and granulated at 190°C in a 45 mm single-screw extruder.

The obtained granulated product exhibited -COOH=0.37% by weight, corresponding to 0.59% of acrylic acid.

Plates prepared in a press at 200°C for 5 minutes starting from two aluminium plates (thickness: 100 μm), with interposition of grafted polymer, exhibited a peel strength (peeling test) of 17 N/cm±2(1.7 kg/cm±0.2).

After a 30-day immersion in water of 25°C the peeling test value remained unchanged.

Example 8

Into a 10 I stainless steel mixer of the rapid type there were introduced:

| —polypropylene in flakes | 2 kg |
| —lauroyl peroxide | 6 g |
| —2,5-dimethyl-2,5-bis(tert.-butylperoxy)-hexane | 1 g |

The polypropylene exhibited:
– an inherent viscosity of 2.28 dl/g
– a residue of the extraction with heptane of 97.9%.
After mixing for 1 hour at 110°C the polymer exhibited -OOH=0.07%±0.01 and [η]=1.5.
The temperature was decreased to 30°C, and 10 g of acrylic acid were introduced.

After mixing at 30°C for 20 minutes the polymer was discharged and granulated at 220°C in a 45 mm single-screw extruder.

The obtained granulated product exhibited -COOH=0.60% by weight, corresponding to 0.96% of acrylic acid.

Plates prepared in a press at 200°C for 5 minutes starting from two aluminium plates (thickness: 100 μm), with interposition of grafted polymer, exhibited a peel strength (peeling test) of 18 N/cm±2(1.8 kg/cm±0.2).

After a 30-day immersion in water of 25°C the peeling test value remained unchanged.

Example 9 (Comparative Test)

Into a 30 l stainless steel mixer of the rapid type there were introduced:

| | |
|---|---|
| —polypropylene in flakes | 2 kg |
| —lauroyl peroxide | 6 g |
| —2,5-dimethyl-2,5-bis(tert.-butylperoxy)-hexane | 1 g |

The polypropylene exhibited:
– an inherent viscosity of 2.28 dl/g
– a residue of the extraction with heptane of 97.9%.
After mixing for 1 hour at 30°C, 40 g of acrylic acid were added to the polymer.
After mixing at 30°C for 20 minutes the polymer was discharged and granulated at 200°C in a single-screw 45 mm extruder. The obtained granulated product exhibited -COOH=0.9% by weight, corresponding to 1.44% of acrylic acid.
Plates prepared in a press at 200°C for 5 minutes starting from two aluminium plates (thickness: 100 μm) with interposition of grafted polymer exhibited a peel strength (peeling test) of 0.0 N/cm (0.0 kg/cm).
After a 30-day immersion in water of 25°C the peeling test value remained unchanged.

Example 10 (Comparative Test)

Into a 10 l stainless steel mixer of the rapid type there were introduced:
-polypropylene in flakes  2 kg
-lauroyl peroxide  6 g
The polypropylene exhibited:
– an inherent viscosity of 2.28 dl/g
– a residue of the extraction with heptane of 97.9%.
After mixing for 1 hour at 110°C the polymer exhibited -OOH=0.07%±0.01 and [η]=1.5.
The temperature was descreased to 30°C, and 40 g of acrylic acid were introduced.
After mixing at 30°C for 20 minutes the polymer was discharged and granulated at 220°C in a 45 mm single-screw extruder.
The obtained granulated product exhibited -COOH=0.6% byweight, corresponding by 0.96% of acrylic acid.
Plates prepared in a press at 200°C for 5 minutes starting from two aluminium plates (thickness: 100 μm), with interposition of grafted polymer, exhibited a peel strength (peeling test) of 4 N/cm±2(0.9 kg/cm±0.2).
After a 30-day immersion in water of 25°C the peeling test value remained unchanged.

Example 11 (Comparative Test)

Into a 10 l stainless steel mixer of the rapid type there were introduced:

| | |
|---|---|
| —polypropylene in flakes | 2 kg |
| —2,5-dimethyl-2,5-bis(tert.-butylperoxy)-hexane | 2 g |

The polypropylene exhibited:
– an inherent viscosity of 2.28 dl/g
– a residue of the extraction with heptane of 97.9%.
After mixing for 1 hour at 110°C the polymer exhibited -OOH=0.02% by weight. The temperature was decreased to 30°C, then 40 g of acrylic acid were introduced.
After mixing at 30°C for 20 minutes the polymer was discharged and granulated at 200°C in a 45 mm single-screw extruder.
The obtained granulated product exhibited -COOH= 1.0% by weight, corresponding to 1.6% of acrylic acid.
Plates prepared in a press at 200°C for 5 minutes starting from two aluminium plates (thickness: 100 μm), with interposition of grafted polymer, exhibited a peel strength (peeling test) of 5 N/cm±2(0.5 kg/cm±0.2).
After a 30-day immersion in water of 25°C the peeling test value remained unchanged.

EP 0 109 532 B2

**Claims**

1. Process for manufacturing modified olefinic polymers consisting of olefinic polymers grafted with unsaturated carboxylic acids, exhibiting strong adhesion to metals, comprising a preliminary peroxidation of the olefinic polymer by mixing it, for 10 - 100 minutes at 70°C -120°C, with an organic peroxide having a half-life of <30 minutes at 100°C and the subsequent mixing of the polymer with the unsaturated carboxylic acid and the grafting reaction of the latter in the absence of solvents at a temperature of 180°C - 220°C in the presence of an organic peroxide having a half-life of ≦3O seconds at 200°C, the peroxide utilized in the preliminary peroxidation step being selected from lauroyl peroxide, benzoyl peroxide, p-chlorobenzoyl peroxide and decanoyl peroxide and the peroxide utilized in the grafting step being selected from tert.-butylperoxide, 2,5-dimethyl-2,5-bis(tert.-butylperoxy)-hexane, dicumylperoxide and di-tert.-butyl-benzoate peroxide.

2. The process according to claim 1 wherein the actual grafting reaction is accomplished by passing the mixture of olefinic polymer, carboxylic acid and organic peroxide through a mixer operating at 180°C - 220°C, the residence time of the mixture ranging from 20 to 30 seconds.

3. The process according to any of the preceding claims, in which the organic peroxide utilized in the grafting step is added, along with the peroxide employed in the preliminary peroxidation step, to the starting olefinic polymer.

4. The process according to claim 1, in which, as a starting olefinic polymer, there is used crystalline polypropylene in the form of prevailingly isotactic macromolecules, crystalline propylene/ethylene copolymers predominantly consisting of propylene units, either of the random type or in blocks, prepared by means of stereospecific catalysts.

**Revendications**

1. Procédé de préparation de polymères oléfiniques modifiés consistant en polymères oléfiniques greffés par des acides carboxyliques insaturés, présentant une forte adhérence aux métaux, comprenant une peroxydation préliminaire du polymère oléfinique par mélange de celui-ci pendant une durée de 10 à 100 minutes à une température de 70 à 120°C avec un peroxyde organique présentant une demi durée de vie < 30 minutes à 100°C et dans lequel on mélange ensuite le polymère avec l'acide carboxylique insaturé et on procède à une réaction de greffage de ce dernier en l'absence de solvants à une température de 180 à 220°C en présence d'un peroxyde organique présentant une demi durée de vie ≦ 30 secondas à 200°C, le peroxyde utilisé dans l'étape de peroxydation préliminaire étant choisi dans le groupe comprenant: peroxyde de lauroyle, peroxyde de benzoyle, peroxyde de p-chlorobenzoyle et peroxyde de décanoyle et le peroxyde utilisé dans l'étape de greffage étant choisi parmi les suivants: tertio-butylperoxyde, 2,5-diméthyl-2,5-bis(tertio-butylperoxy)-hexane, dicumylperoxyde et di-tertio-butyl-benzoate-peroxyde.

2. Le procédé selon la revendication 1, dans lequel on met en oeuvre la réaction effective de greffage en faisant passer le mélange de polymère oléfinique, d'acide carboxylique et de peroxyde organique à travers un mélangeur fonctionnant à une température de 180 à 220°C, le temps de séjour du mélange étant compris entre 20 et 30 secondes.

3. Le procédé selon l'une quelconque des revendications précédentes, dans lequel le peroxyde organique utilisé dans l'étape de greffage est ajouté en même temps que le peroxyde employé dans l'étape de peroxydation préliminaire au polymère oléfinique de départ.

4. Le procédé selon la revendication 1, dans lequel on utilise comme polymère oléfinique de départ un polypropylène cristallin se trouvant en majeure partie sous la forme de macromolécules isotactiques, des copolymères propylène/éthylène cristallins consistant de façon prédominante en motifs propylènes, soit du type aléatoire, soit du type en bloc, préparés à l'aide de catalyseurs stéréospécifiques.

**Patentansprüche**

1. Verfahren zur Herstellung von modifizierten Olefinpolymeren, die aus Olefinpolymeren, gepfropft mit ungesättigten Carbonsäuren, bestehen und eine starke Haftung an Metallen zeigen, welches umfaßt: eine vorangehende Peroxidation des Olefinpolymers, indem man es 10 bis 100 min bei 70 bis 120°C mit einem organischen Peroxid, das eine Halbwertzeit von <30 min bei 100°C besitzt, mischt, und anschließendes Mischen des Polymers mit der ungesättigten Carbonsäure und Pfropfreaktion der letzteren in Abwesenheit von Lösungsmitteln bei einer Temperatur von 180 bis 220°C in Anwesenheit eines organischen Peroxids mit einer Halbwertzeit von ≦ 30 sec bei 200°C, bei welchem das in der vorangehenden Peroxidationsstufe verwendete

7

Peroxid ausgewählt ist aus Lauroylperoxid, Benzoylperoxid, p-Chlorbenzoylperoxid und Decanoylperoxid und bei welchem das in der Pfropfstufe verwendete Peroxid ausgewählt ist aus t-Butylperoxid, 2,5-Dimethyl-2,5-bis-(t-butylperoxy)-hexan, Dicumylperoxid und Di-t-butylbenzoat-peroxid.

2. Verfahren nach Anspruch 1, worin die tatsächliche Pfropfreaktion durchgeführt wird, indem man die Mischung aus dem Olefinpolymer, der Carbonsäure und dem organischen Peroxid durch einen bei 180 bis 220°C betriebenen Mischer leitet, wobei die Verweilzeit der Mischung von 20 bis 30 sec beträgt.

3. Verfahren nach einem der vorhergehenden Ansprüche, bei welchem das in der Pfropfstufe verwendete, organische Peroxid zusammen mit dem in der vorangehenden Peroxidationsstufe verwendeten Peroxid dem Olefinausgangspolymer zugegeben wird.

4. Verfahren nach Anspruch 1, in welchem als Olefinausgangsmaterial kristallines Polypropylen in Form von vorherrschend isotaktischen Makromolekülen, kristalline Propylen/Ethylen-Copolymere, die vorherrschend aus Propyleneinheiten in statistischer Verteilung oder in Blöcken bestehen und mittels stereospezifischen Katalysatoren hergestellt hergestellt worden sind, verwendet werden.